# EUROPEAN PATENT SPECIFICATION

(11) **EP 2 803 606 B1**
(45) Date of publication and mention of the grant of the patent: **14.10.2015**
(21) Application number: 14167648.6
(22) Date of filing: 09.05.2014
(51) Int. Cl.: B65G 47/14

(54) **Object orienting device**
Objektausrichtungsvorrichtung
Dispositif d'orientation d'objets

(30) Priority: 17.05.2013 IT MI20130810
(43) Date of publication of application: 19.11.2014
(73) Proprietor: BONINO S.p.A. con unico azionista, I-15121 Alessandria (IT)
(72) Inventor: Bonino, Alessandro, I-15121 Alessandria (IT); Sambuelli, Marco, I-15121 Alessandria (IT)
(74) Representative: Leihkauf, Steffen Falk

(56) References cited:
- US-A- 3 684 129
- US-A- 4 610 345

## Description

The present invention generally refers to systems for orienting objects, and in particular to an orienting machine for arranging a plurality of objects in sequence and with a predetermined orientation, in which the objects have a shape that is generally the same, but not identical, due to random deformations, as stated in the preamble of claim 1.

Such orienting systems are usually employed in manufacturing, processing, assembling, packaging lines or the like of industrial or consumer products in order to allow the supply of components, pieces, products (herein below referred to as "objects") with the orientation required by the subsequent treatment or processing step. As an example which forms a closest prior art for the invention. US3684129A describes a sorter for aerosol valves having attached tubes, a machine as stated in the preamble of claim 1.

In order to meet the needs of an automatized industrial manufacturing, the object orienting systems have to ensure, on one hand, a high orientation speed of the objects and, on the other hand, they have to be able to orient also objects having a very irregular shape, as in the case of the so-called "trigger pumps" for dispensing fluids, for example, liquid detergents, shampoos, cosmetic and drug products. Such trigger pumps usually comprise a main body housing a pumping mechanism and forming a cap screwable to a container, a small elongated suctioning tube extending from the main body to reach the fluid to be dispensed, and a dispensing head extending from the main body on an outer side, opposite the small suctioning tube. Depending on the materials and dimensions of the individual components, the trigger pumps can have a barycenter coincident with the main body or very far from it.

Orienting machines are known, comprising a sequence of orienting seats moveable along a handling path, in which each orienting seat is suitable to receive one of such objects, respectively, in a proper orientation, for example, with the dispensing head downwardly and the small suctioning tube upwardly, but also in an orientation that is different from the desired one, a feeder conveying the objects into the orienting seats in a starting point of the handling path, a compressed air ejection blower directing a compressed air jet against the objects received in the orienting seats so as to eject from the orienting seats the objects with an orientation that is different from the proper one (and, possibly, to hold the properly oriented objects in the orienting seats, e.g., by a depression due to a Venturi effect), as well as withdrawing means that withdraw, downstream of the handling path, the properly oriented objects from the orienting seats.

Such known orienting machines, usually implemented as rotary machines with a circular crown forming the orienting seats, reach high orientation speeds, but have the drawback that properly oriented objects, but having a very irregular shape, or objects the desired orientation of which involves a little stable support (for example, with a very high barycenter), too easily exit the orienting seats, thus decreasing the effective orientation speed.

A further drawback of the known orienting machines is that they are susceptible to variations in the shape of the object to be oriented. With reference to the trigger pumps, the small suctioning tubes are bent in an unpredictable manner. This alters both the lateral overall dimensions and the position of the barycenter of the pumps, and hinders a quick and repeatable receiving thereof in the orienting seats, but also a quick ejection thereof in the case of a mispositioning.

A still further drawback of the known orienting machines is their great dimension for a given orientation speed, mainly due to the fact that the orienting seats must be able to receive not only the pump main body, but also the small suctioning tube, which may have a high length, depending on the dimensions of the container for which the pump is intended.

A still further drawback of the orienting machines of the prior art is their insufficient versatility in orienting trigger pumps having different shapes and weight distribution and, consequently, in the complexity and difficulty in adapting to format changes.

Therefore, the object of the present invention is to provide an improved machine for orienting pump plugs having a small elongated tube extending in a longitudinal direction and a dispensing head connected to an end of the small tube and enlarged transversally to the longitudinal direction, such as to at least partially obviate the drawbacks mentioned with reference to the prior art.

These and other objects are achieved by an orienting machine according to claim 1. The dependent claims relate to advantageous embodiments.

According to an aspect of the invention, an orienting machine for orienting pump plugs having a small elongated tube extending in a longitudinal direction and a dispensing head connected to an end of the small tube and enlarged transversally to the longitudinal direction, comprises:
- a support structure,
- a rotating plate inclined with respect to a horizontal plane and rotatably connected to the support structure about a rotational axis, in which the rotating plate comprises a support ring forming an annular support surface extending along a selection path,
- a side wall extending along an outer circumference of the support surface so as to define the selection path radially outwardly and to define, together with the rotating plate a collecting space to collect the loose pump plugs to be oriented,
- an electric motor actuatable to rotate the rotating plate about the rotational axis so as to supply the pump plugs from the collecting space on the support surface in a starting point of the selection path and to move the support surface along the selection path from the starting point up to a withdrawal point,
in which the support surface forms:
- a radially inner surface, that is substantially smooth and extending along the entire selection path,
- a radially outer surface, that is substantially smooth and extending along the entire selection path, the radially outer surface being lowered with respect to the radially inner surface,
- a step extending along the entire selection path between the radially inner surface and the radially outer surface,
so that the pump plugs can arrange on the support surface with a proper orientation, with the dispensing head supported on the lowered radially outer surface and with the small tube oriented approximately radially inwardly and supported on the lifted radially inner surface,
- ejection means connected to the support structure along an ejection length of the selection path - between the supplying length and the withdramal point and configured to eject from the support surface the pump plugs having an orientation that is different from the proper orientation,
- a plurality of retractable partitioning walls connected to the support ring in a displaceable manner between a lifted position, in which the partitioning walls project from the support surface, forming a sequence of discrete seats to singularize and receive the pump plugs with the proper orientation, and a lowered position, in which the partitioning walls are retracted from the support surface, allowing the pump plugs sliding on the support surface in the (circumferential) direction of the selection path,
- drive means that displace the partitioning walls so that, in the supplying length, the partitioning walls are in the lifted position, and in a built up length of the selection path between the ejection length and the withdrawal point the partitioning walls are retracted in the lowered position, said retractable partitioning walls are slidably received between said lifted and lowered positions in a plurality of through slits formed by the support ring and opening in the radially inner surface.

The lifted partitioning walls promote a receiving of the pump plugs with a proper orientation in the starting point of the selection path, while the lowered partitioning walls promote the ejection of the pump plugs that are not properly oriented and the formation of a row of properly oriented pump plugs, brought near in mutual contact, upstream of the withdrawal point.

In fact, in a supplying length of the selection path, starting from the starting point (the lowest point), where the pump plugs are supplied on the support surface, the partitioning walls act both as guides for the insertion in the discrete seats of plugs which are singularized and oriented in a direction that is approximately radial to the rotational axis, and as small dragging blades to transport the plugs received in the discrete seats (upwardly) up to the ejection length. Subsequently, the gradual or sudden withdrawal of the partitioning walls in the lowered position thereof deprives the pump plugs supported on the support surface of their lateral support and simplifies, along the ejection length, the ejection of the improperly oriented pump plugs, and, in a build-up length upstream of the withdrawal point, the (circumferential) sliding of the pump plugs one in contact with the other one, with a complete elimination of void spaces in the row of plugs exiting the orienting machine. This allows performing the step of selection and ejection of the improperly oriented plugs and the withdrawal step of the row of plugs with different speeds and distances between the plugs and an increase in the output of the machine.

In order to better understand the invention and appreciate the advantages thereof, some embodiments will be described herein below by way of non-limiting example, with reference to the figures, in which:

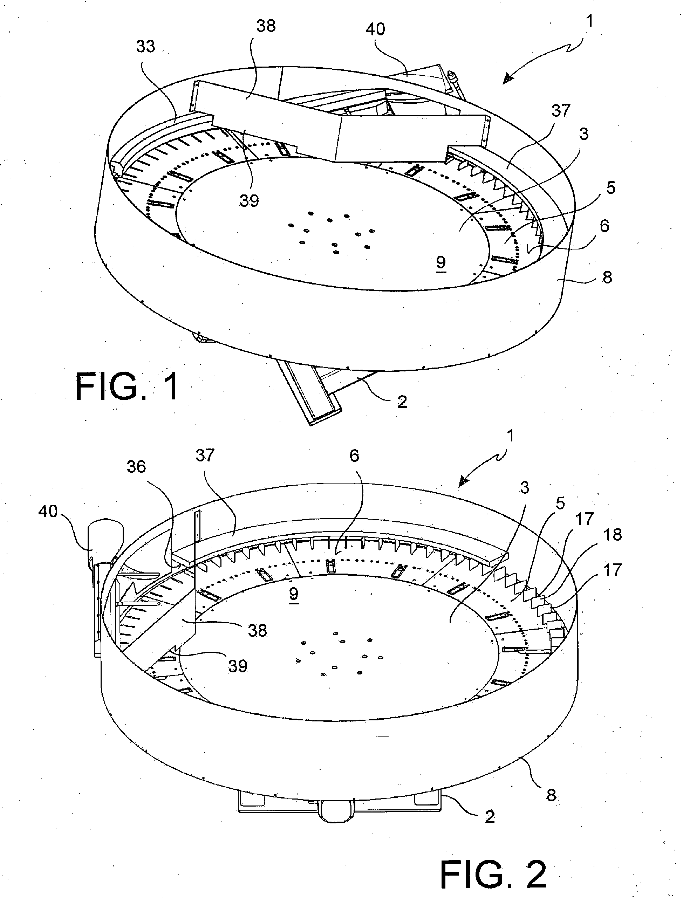

Figs. 1 - 4 are perspective views of an orienting machine according to an embodiment;

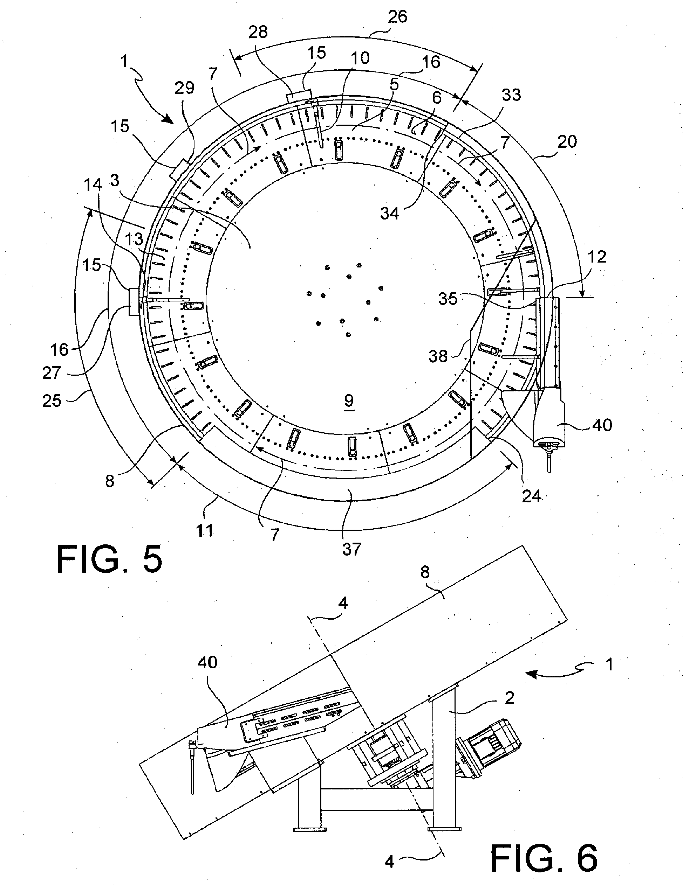

Fig. 5 is a top view of the machine in Fig. 1;
Fig. 6 is a side view of the machine in Fig. 1;

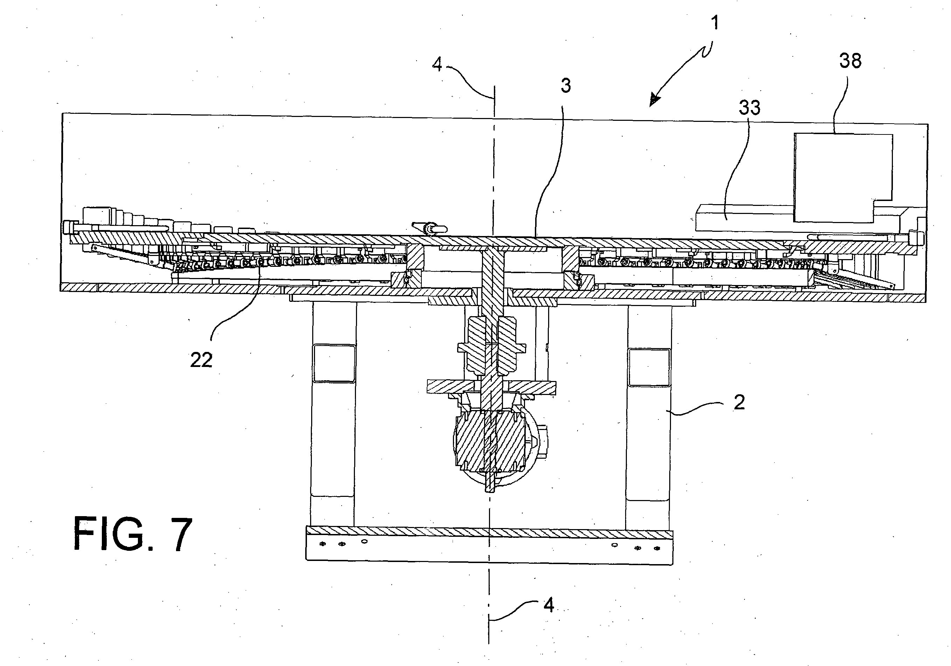

Fig. 7 is a sectional view of the machine in Fig. 1;

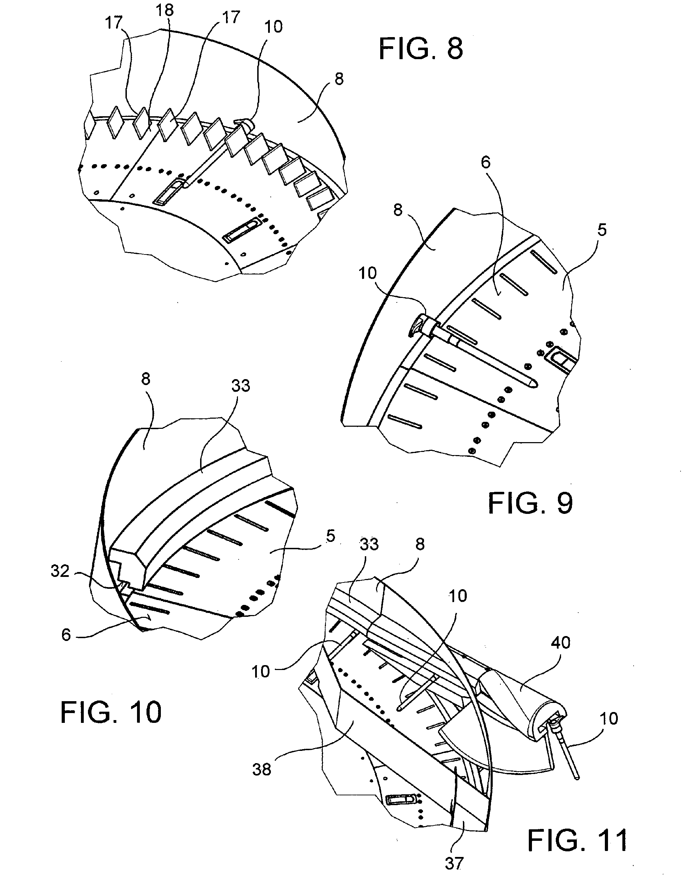

Figs. 8, 9, 10, 11 are enlarged views of details of the machine according to embodiments;
Figs. 12, 13, 14 are sectional views of details of a handling mechanism of retractable partitioning walls of the machine according to an embodiment.

With reference to the Figures, a machine 1 for orienting objects having the characteristic shape of pump plugs 10 with a small elongated tube extending in a longitudinal direction and a dispensing head connected to an end of the small tube and enlarged transversally to the longitudinal direction, is generally indicated with the reference 1.

The machine 1 comprises a support structure 2 and a rotating plate 3 inclined with respect to a horizontal plane and rotatably connected to the support structure 2 about a rotational axis 4, in which the rotating plate 3 comprises a support ring 5 forming an annular support surface 6, extending along a selection path 7.

A side wall 8 extends along an outer circumference of the support surface 6 so as to define the selection path 7 radially outwardly and to define, together with the rotating plate 3 a collecting space 9 to collect the loose pump plugs 10 to be oriented.

An electric motor 11 is connected to the support structure 2 and to the rotating plate 3 and actuatable to rotate the rotating plate 3 about the rotational axis 4 so as to supply the pump plugs 10 from the collecting space 9 on the support surface 6 in a supplying length 11 of the selection path 7 and to move the support surface 6 along the selection path from the supplying length 11 up to a withdrawal point 12.

The support surface 6 forms a radially inner surface 13 that is substantially smooth and extending along the entire selection path 7, a radially outer surface 14 lowered with respect to the radially inner surface 13, that is substantially smooth and extending along the entire selection path 7, as well as a step 31 extending along the entire selection path 7 between the radially inner surface 13 and the radially outer surface 14, so that the pump plugs 10 can arrange on the support surface 6 with a proper orientation, with the dispensing head supported on the lowered outer surface 14 and with the small tube oriented approximately radially inwardly (with respect to the rotational axis 4) and supported on the inner surface 13.

Along an ejection length 16 (downstream of the supplying length 11 and upstream of the withdrawal point 12) of the selection path 7 ejection means 15 are provided for, which are connected to the support structure 2 and configured to eject from the support surface 6 the pump plugs 10 having an orientation that is different from the proper orientation.

The machine 1 further comprises a plurality of retractable partitioning walls 17, connected to the support ring 5 in a displaceable manner between a lifted position, in which the partitioning walls 17 project from the support surface 6, forming a sequence of discrete seats 18 to singularize and receive the pump plugs 10 with the proper orientation, and a lowered position, in which the partitioning walls 17 are retracted from the support surface 6, allowing the pump plugs 10 sliding on the support surface in a (circumferential) direction of the selection path 7, as well as drive means 19 that displace the partitioning walls 17 so that, in the supplying length 11 the partitioning walls 17 are in the lifted position, and in a build-up length 20 of the selection path (downstream of the ejection length 16 and upstream of the withdrawal point 12) the partitioning walls 17 are retracted in the lowered position.

In this manner, in the supplying length 11 the lifted partitioning walls 17 promote a receiving of the pump plugs 10 with the proper orientation, while in the ejection length 16 and in the build-up length 20 the lowered partitioning walls 17 promote the ejection of the not properly oriented pump plugs 10 and the formation of a row of pump plugs 10 that are properly oriented and brought near in mutual contact before reaching the withdrawal point 12.

In fact, in the supplying length 11 of the selection path 7 (the lowest point of the rotating plate 3) the partitioning walls 17 act both as guides for the insertion of the plugs 10 in the discrete seats 18 in a singularized manner and oriented in a direction that is approximately radial to the rotational axis 4, and as small dragging blades to transport the plugs 10 received in the discrete seats 18 from the supplying length 11 upwardly up to the ejection length 16. Subsequently, the gradual or sudden withdrawal of the partitioning walls 17 in the lowered position thereof deprives the pump plugs 10 supported on the support surface 6 of their lateral support and simplifies, along the ejection length 16, the ejection of the improperly oriented pump plugs 10, and, along the build-up length 20, the circumferential sliding of the pump plugs 10 moving near in mutual contact with a complete elimination of void spaces in the row of plugs 10 exiting the machine 1.

This allows performing the step of selection and ejection of the improperly oriented plugs and the withdrawal step of the row of plugs with different speeds and distances between the plugs and an increase in the output of the machine.

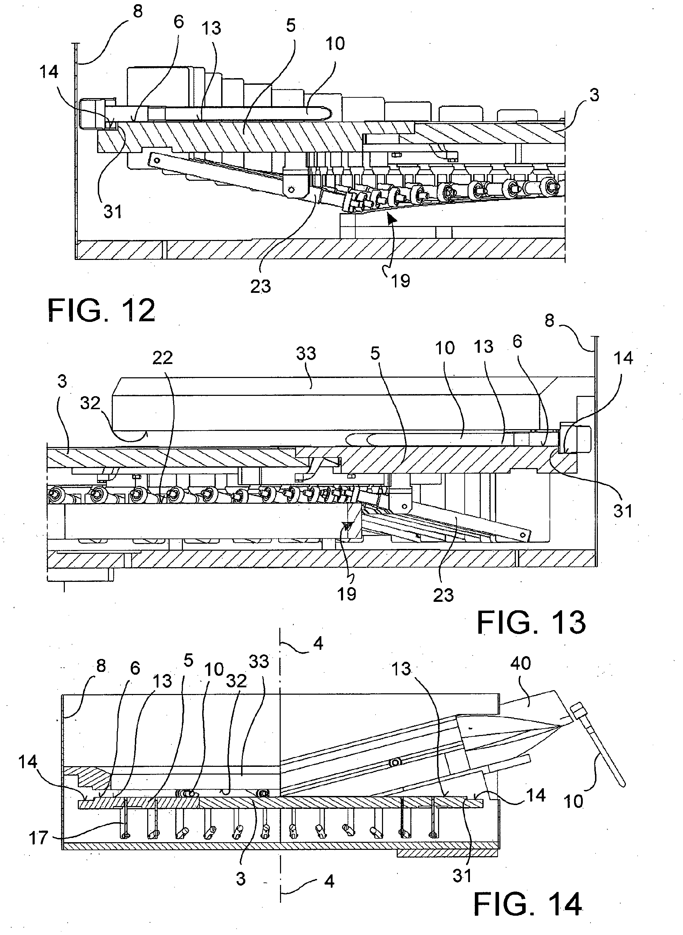

In accordance with an embodiment, the support ring 5 forms a plurality of through slits 21, that are preferably substantially radial to the rotational axis 4 and arranged with a constant angular pitch along the entire selection path 7. The through slits 21 open in the support surface 6, in the radially inner surface 13, and receive each respectively one of the retractable partitioning walls 17 in a slidable manner between the above-mentioned lifted (Fig. 12) and lowered (Fig. 13) positions. As it can be noticed for example in Fig. 14, in the lowered position, an upper edge of the partitioning walls 17 is retracted with respect to the (inner 13) support surface 6 or flush therewith, so as not to hinder the circumferential sliding of the plugs 10.

The drive means 19 for the movement of the partitioning walls 17 may comprise a preferably mechanical positioning mechanism, determining the position (i.e., the height with respect to the support surface 6) of the partitioning walls 17 in the same manner for all the partitioning walls 17 as a function of the position thereof along the selection path, preferably as a function of the angular position of the rotating plate 3.

According to an embodiment, the handling mechanism comprises a cam track 22 that is stationary with respect to the support structure 2 and extending about the rotational axis 4 and a cam follower, for example a bellcrank lever 23 connected to the partitioning wall 17 and in contact with the cam track 22.

Advantageously, the partitioning walls 17 are in the lifted position from a starting point 24 of the supplying length 11 up to an initial portion 25 of the ejection length 16, and they gradually lower from the lifted position in the initial portion 25 up to the lowered position in an end portion 26 of the ejection length 16, and they remain in the lowered position from the end portion 26 of the ejection length 16 at least up to the withdrawal point 12. Between the withdrawal point 12 and the starting point 24 of the supplying length 11 the partitioning walls 17 move again upwardly from the lowered position to the lifted position.

The ejection means 15 preferably comprise one or more air-driven ejection blowers 27, 28, 29, connected in a stationary manner to the support structure 2 (preferably the side wall 8) or, alternatively, to the support ring 5, and configured so as to direct an air jet above the support surface 6 and to eject from the support surface 6 the plugs 10 with an orientation that is different from the desired orientation.

To this aim, the side wall 8 or the support surface 6 may have access windows 30 suitable to allow the air jet accessing the plugs supported on the support surface 6.

In an embodiment, the ejection means 15 comprise a first blower 27 arranged at the initial portion 25 of the ejection length 16 and a second blower 28 arranged at the end portion 26 of the ejection length 16 and that blows an air jet with a flow rate that is less than that of the air jet blown by the first blower 27 and, preferably at a height (vertical distance) from the support surface 6 that is higher than the height of the first air jet.

In this manner, in the initial portion 25 of the ejection length 16, once the partitioning walls 17 are lifted, the improperly oriented plugs 10 undergo a strong ejecting thrust, while the properly oriented plugs 10 are hold in the radial direction by the step 31 and in the lateral direction by the partitioning walls 17. On the contrary, in the end portion 26 of the ejection length 16 once the partitioning walls 17 are lowered, the plugs 10 undergo an ejecting thrust that is less strong and at a higher height, such as to eliminate only the plugs possibly stacked on the properly oriented ones, but without ejecting also the latter ones.

In an embodiment, an intermediate blower 29 may be provided for, which is arranged between the first blower 27 and the second blower 28 and that blows an air jet having a flow rate that is lesser than the first blower and higher than the second blower 28.

According to an embodiment, the orienting machine 1 comprises an escape preventing surface 32 extending above the radially outer surface 14 along the build-up length 20 of the selection path 7 downstream of the ejection length 16 so as to prevent the plugs from 10 with the proper orientation from exiting upwardly from the radially outer surface 14.

By virtue of the escape preventing surface 32, the already properly oriented plugs cannot accidentally exit anymore the support surface 6 (for example, due to vibrations or impacts to which other plugs have undergone) and they may slide one approaching to the other without anyhow overlapping in height. This allows increasing the rotational speed of the rotating plate 3 and, thus, the output of the machine 1.

In accordance with an embodiment of the invention, the escape preventing surface 32 is formed in an escape preventing wall 33 connected to the side wall 8 and facing the support surface 6.

The escape preventing surface 32 preferably extends between the end of the ejection length 16 and the withdrawal point 12 of the selection path 7, along an angular extent ranging between 50° and 70°, preferably 60°.

In an embodiment, the height of the escape preventing surface 32, i.e., the vertical distance thereof from the radially outer surface 14, decreases in the handling direction along the selection path 7 from an initial end 34 thereof to a final end 35 thereof, so that the escape preventing surface 32 approaches, gradually or in discrete steps, to a surface of the plug 10 facing upwardly (when the plug is properly oriented), as the plug itself approaches the withdrawal point 12. In this manner, the constraint of the properly oriented plug increases as it approaches the withdrawal point 12, thus avoiding undesired jammings and wedgings in the most crowded areas of plugs that are loose and partially received on the support surface 6 and the undesired escape of properly oriented plugs.

The escape preventing wall 33 may comprise a plurality of distinct portions, that are manufactured separately and singularly connectable to the support structure 2. This simplifies the transportation and assembling of the components, and allows using a same wall portion with an escape preventing surface for orienting different objects.

According to an embodiment, the orienting machine 1 further comprises a wiping off surface 36 arranged above the support surface 6 and extending along the supplying length 11 and, possibly, up to the initial portion 25 of the ejection length 16. The wiping off surface 36 is configured to prevent one or more plugs 10 from stacking on a single discrete seat 18 defined between two partitioning walls 17, respectively.

The wiping off surface 36 may be formed on the underside of a wiping off wall 37 connected to the support structure 2, for example to the side wall 8, and extending from about -45° to about +135° with respect to the lowest or starting point 0° of the selection path 7.

In order to avoid jammings and wedgings of objects in the supplying length 11, the wiping off surface 36 height (i.e., the distance thereof from the support surface 6) may gradually increase in the handling direction along the selection path 7.

According to still a further embodiment, the orienting machine 1 comprises a protection wall 38 separating the selection path 7 in the withdrawal point 12 from the collecting space 9, preventing an accidental displacement of the plugs from the collecting space 9 on the support surface in the withdrawal area.

The protection wall 38 may extend between two opposite ends connected to the side wall 8, one upstream and the other one downstream of the withdrawal point 12 and it may form an inlet edge 39 extending astride the selection path upstream of the withdrawal point 12 and having such a shape as to let pass only the plugs with the proper orientation and to deviate the plugs with an orientation that is different from the proper one out of the selection path 7 towards the collecting space 9.

As it is known, the machine 1 further comprises an extractor 40 connected to the withdrawal point 12 of the selection path 7 and suitable to move the row of plugs 10 oriented and brought near away from the machine 1.

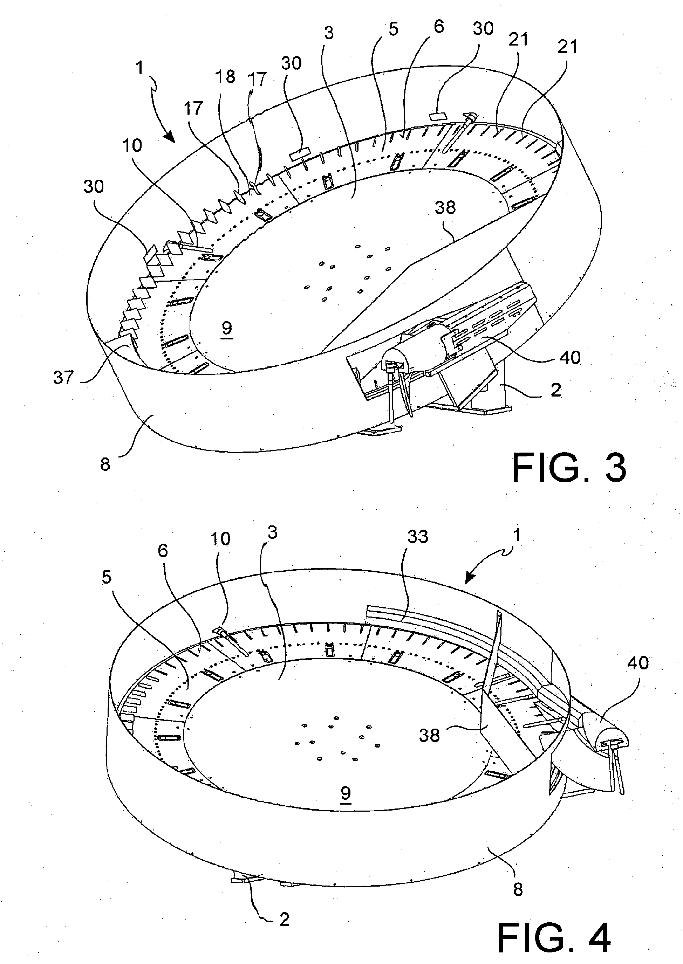

The extractor 40 may comprise a conveyor with a conveyor belt or a slide ramp and guide walls, so shaped as to maintain the orientation of the plugs 10 during the removal thereof from the orienting device 1 machine 1. In a preferred embodiment, the extractor 40 rotated the extracted plugs 10 by about 90° in order to bring them from their approximately horizontal or "lying down" orientation to an approximately vertical or "hanging" orientation (Fig. 4).

The orienting machine according to the invention has a number of advantages, particularly:
- a higher supply efficiency of the plugs on the support surface,
- the possibility to rotate the rotating plate at higher speeds compared to the prior art,
- a easier withdrawal of the "lying down" or horizontal plugs with respect to the ones that are oriented in a vertical direction of the prior art,
- a stabler positioning of the plugs on the support surface and a reduced susceptibility to variations in the shape and position of the plug barycenter,
- the possibility to orient plugs with small tubes having a variable length (again facing radially inwardly),
- a better adaptability to format changes of the plugs to be oriented,
- a lesser consumption of compressed air, since the improperly oriented plugs have not to be lifted out of very deep alveoli, as in the prior art, and the retractable of the partitioning walls eliminates the lateral constraint during the ejection,
- reduced vertical overall dimensions, since the plugs are and remain "laying down".

Of course, to the orienting machine 1 according to the present invention, those of ordinary skill in the art, in order to meet contingent, specific needs, will be able to make further modifications and variations, all anyhow falling within the protection scope of the invention, as defined by the following claims.

## Claims

1. A machine (1) for orienting objects having the characteristic shape of pump plugs (10) with a small elongated tube extending in a longitudinal direction and a dispensing head connected to an end of the small tube and enlarged transversally to the longitudinal direction, the machine (1) comprising:
- a support structure (2),
- a rotating plate (3) inclined with respect to a horizontal plane and rotatably connected to the support structure (2) about a rotational axis (4), in which the rotating plate (3) comprises a support ring (5) forming an annular support surface (6), extending along a selection path (7),
- a side wall (8) extending along an outer circumference of the support surface (6) so as to define the selection path (7) radially outwardly and to define, together with the rotating plate (3), a collecting space (9) to collect the loose pump plugs (10) to be oriented,
- an electric motor (11) to rotate the rotating plate (3) about the rotational axis (4) so as to supply the pump plugs (10) from the collecting space (9) on the support surface (6) in a supplying length (11) of the selection path (7) and to move the support surface (6) along the selection path from the supplying length (11) up to a withdrawal point (12),
in which the support surface (6) forms a radially inner surface (13) that is substantially smooth and extending along the entire selection path (7), a radially outer surface (14) lowered with respect to the radially inner surface (13), which is substantially smooth and extending along the entire selection path (7), as well as a step (31) extending along the entire selection path (7) between the radially inner surface (13) and the radially outer surface (14), so that the pump plugs (10) can arrange on the support surface (6) with a proper orientation, with the dispensing head supported on the lowered radially outer surface (14) and with the small tube oriented approximately radially inwardly and supported on the radially inner surface (13),
- ejection means (15) connected to the support structure (2) along an ejection length (16) of the selection path between the supplying length (11) and the withdrawal point (12) and configured to eject from the support surface (6) the pump plugs (10) having an orientation that is different from the proper orientation ,
- a plurality of retractable partitioning walls (17), connected to the support ring (5) in a displaceable manner between a lifted position, in which the partitioning walls (17) project from the support surface (6), forming a sequence of discrete seats (18) to singularize and receive the pump plugs (10) with the proper orientation, and a lowered position in which the partitioning walls (17) are retracted in the support surface (6) and allow the pump plugs (10) sliding on the support surface in a direction circumferential to the rotational axis (4), drive means (19) that displace the partitioning walls (17) so that, in the supplying length (11), the partitioning walls (17) are in the lifted position, and in a build-up length (20) of the selection path between the ejection length (16) and the withdrawal point (12), the partitioning walls (17) are retracted in the lowered position**characterized in that** said retractable partitioning walls (17) are slidably received between said lifted and lowered positions in a plurality of through slits (21) formed by the support ring (5) and opening in the radially inner surface (13).

2. The machine (1) according to claim 1, wherein the drive means (19) comprise a mechanical positioning mechanism that arranges all the partitioning walls (17) in the same manner as a function of the position thereof along the selection path.

3. The machine (1) according to claim 2, wherein the through slits (21) are radial to the rotational axis (4),
wherein the handling mechanism comprises a cam track (22) that is stationary with respect to the support structure (2) and extending about the rotational axis (4), and a cam follower connected to the partitioning wall (17) and in contact with the cam track (22).

4. The machine (1) according to one of the previous claims, wherein the partitioning walls (17) are in the lifted position from a starting point (24) of the supplying length (11) up to an initial portion (25) of the ejection length (16), and they gradually lower from the lifted position in the initial portion (25) up to the lowered position in an end portion (26) of the ejection length (16) and remain in the lowered position from the end portion (26) of the ejection length (16) at least up to the withdrawal point (12).

5. The machine (1) according to claim 4, wherein the ejection means (15) comprise a first blower (27) arranged at the initial portion (25) of the ejection length (16) and a second blower (28) arranged at the end portion (26) of the ejection length (16), wherein the second blower (27) blows an air jet with a flow rate that is less than that of the air jet blown by the first blower (27).

6. The machine (1) according to claim 5, comprising an intermediate blower (29) arranged between the first blower (27) and the second blower (28) and that blows an air jet with a flow rate that is less than the flow rate of the first blower (27) and greater than the flow rate of the second blower (28).

7. The machine (1) according to one of the previous claims, comprising an escape preventing surface (32) extending above the radially outer surface (14) along the build-up length (20) of the selection path (7) downstream of the ejection length (16) so as to prevent the plugs (10) with the proper orientation from exiting upwardly from the radially outer surface (14).

8. The machine (1) according to claim 7, wherein the escape preventing surface (32) extends between the end of the ejection length along an angular extent ranging between 50° and 70°, preferably 60°.

9. The machine (1) according to claim 7, comprising a wiping off surface (36) arranged above the support surface (6) and extending along the supplying length (11) and up to the initial portion (25) of the ejection length (16), said wiping off surface (36) being configured to prevent one or more plugs (10) from stacking on a single discrete seat (18) defined between two partitioning walls (17), respectively.

10. The machine (1) according to claim 9, comprising a protection wall (38) separating the selection path (7) in the withdrawal point (12) from the collecting space (9), preventing a direct displacement of plugs from the collecting space (9) to the withdrawal point (12).

11. The machine (1) according to claim 10, wherein the protection wall (39) extends between two opposite ends connected to the side wall (8), one upstream and the other one downstream of the withdrawal point (12) and forms an inlet edge (39) extending astride the selection path upstream of the withdrawal point (12) and having such a shape as to let pass only the plugs with the proper orientation and to deflect the plugs with an orientation that is different from the proper orientation out of the selection path (7) and towards the collecting space (9).

## Patentansprüche

1. Maschine (1) zum Orientieren von Objekten, welche die charakteristische Form von Pumpensteckern (10) mit einer kleinen länglichen Leitung, welche sich in einer longitudinalen Richtung erstreckt, und einem Abgabekopf, welcher mit einem Ende der kleinen Leitung verbunden und transversal zu der longitudinalen Richtung erweitert ist, aufweisen, wobei die Maschine (1) umfasst:
- eine Halterungsstruktur (2),
- eine rotierende Platte (3), welche in Bezug auf eine horizontale Ebene geneigt ist und mit der Halterungsstruktur (2) um eine Rotationsachse (4) rotierbar verbunden ist, in welcher die rotierende Platte (3) einen Halterungsring (5) umfasst, welcher eine ringförmige Halterungsfläche (6) ausbildet und welcher sich entlang eines Auswahlpfades (7) erstreckt,
- eine Seitenwand (8), welche sich entlang eines äußeren Umfangs der Halterungsfläche (6) erstreckt, um den Auswahlpfad (7) radial nach außen zu definieren und zusammen mit der rotierenden Platte (3) einen Sammelraum (9) zu definieren, um die losen Pumpenstecker (10), welche zu orientieren sind, zu sammeln,
- einen Elektromotor (11), um die rotierende Platte (3) um die Rotationsachse (4) zu rotieren, um die Pumpenstecker (10) von dem Sammelraum (9) an die Halterungsfläche (6) in einer Versorgungslänge (11) des Versorgungspfades (7) bereitzustellen und die Halterungsfläche (6) entlang des Auswahlpfades von der Versorgungslänge (11) bis zu einem Rückzugspunkt (12) zu bewegen, in welchem die Halterungsfläche (6) eine radial innere Fläche (13), welche im Wesentlichen glatt ist und sich entlang des gesamten Auswahlpfades (7) erstreckt, eine radial äußere Fläche (14), welche in Bezug auf die radial innere Fläche (13) abgesenkt ist, welche im Wesentlichen glatt ist und sich entlang des gesamten Auswahlpfades (7) erstreckt, sowie eine Stufe (31) bildet, welche sich entlang des gesamten Auswahlpfades (7) zwischen der radial inneren Fläche (13) und der radial äußeren Fläche (14) erstreckt, so dass sich die Pumpenstecker (10) an der Halterungsfläche (6) in einer passenden Orientierung anordnen können, wobei der Abgabekopf an der abgesenkten radial äußeren Fläche (14) gehaltert ist und wobei die kleine Leitung in etwa radial nach innen orientiert ist und an der radial inneren Fläche (13) gehaltert ist,
- Auswurfmittel (15), welche mit der Halterungsstruktur (2) entlang einer Auswurflänge (16) des Auswahlpfades zwischen der Versorgungslänge (11) und dem Rückzugspunkt (12) verbunden sind, und welche dazu eingerichtet sind, die Pumpenstecker (10), welche eine Orientierung aufweisen, die von der passenden Orientierung abweichend ist, von der Halterungsfläche (6) auszuwerfen,
- eine Mehrzahl von rückziehbaren Trennungswänden (17), welche mit dem Halterungsring (5) in einer verlagerbaren Weise zwischen einer angehobenen Position, in welcher die Trennungswände (17) von der Halterungsfläche (6) vorstehen, wobei eine Abfolge von getrennten Sitzen (18) ausgebildet ist, um die Pumpenstecker (10) mit der passenden Orientierung herauszustellen und aufzunehmen, und einer abgesenkten Position verbunden sind, in welcher die Trennungswände (17) in die Halterungsfläche (6) zurückgezogen sind und den Pumpensteckern (10) erlauben, an der Halterungsfläche in einer zu der Rotationsachse (4) umlaufenden Richtung zu gleiten, Antriebsmittel (19), welche die Trennungswände (17) verlagern, so dass in der Versorgungslänge (11) die Trennungswände (17) in der angehobenen Position sind und in einer Aufbaulänge (20) des Auswahlpfades zwischen der Auswurflänge (16) und dem Rückzugspunkt (12) die Trennungswände (17) in der abgesenkten Position zurückgezogen sind, **dadurch gekennzeichnet, dass** die rückziehbaren Trennungswände (17) zwischen den angehobenen und abgesenkten Positionen in einer Mehrzahl von Durchgangsschlitzen (21) gleitbar aufgenommen sind, welche durch den Halterungsring (5) gebildet sind und sich in die radial innere Fläche (13) öffnen.

2. Maschine (1) nach Anspruch 1, wobei die Antriebsmittel (19) einen mechanischen Positionier-Mechanismus umfassen, welcher alle Trennungswände (17) in der gleichen Weise als eine Funktion der Position davon entlang des Auswahlpfades anordnet.

3. Maschine (1) nach Anspruch 2, wobei die Durchgangsschlitze (21) zu der Rotationsachse (4) radial sind, wobei der Handhabungs-Mechanismus eine Nockenbahn (22), welche in Bezug auf die Halterungsstruktur (2) stationär ist und sich um die Rotationsachse (4) erstreckt, und einen Nocken-Mitnehmer umfasst, welcher mit der Trennungswand (17) verbunden ist und in Kontakt mit der Nockenbahn (22) ist.

4. Maschine (1) nach einem der vorhergehenden Ansprüche, wobei die Trennungswände (17) von einem Startpunkt (24) der Versorgungslänge (11) bis zu einem Initial-Abschnitt (25) der Auswurflänge (16) in der angehobenen Position sind, und sie sich allmählich von der angehobenen Position in dem Initial-Abschnitt (25) bis zu der abgesenkten Position in einer Endposition (26) der Auswurflänge (16) absenken und von der Endposition (26) der Auswurflänge (16) bis wenigstens zu dem Rückzugspunkt (12) in der abgesenkten Position verbleiben.

5. Maschine (1) nach Anspruch 4, wobei die Auswurfmittel (15) ein erstes Gebläse (27), welches an dem Initial-Abschnitt (25) der Auswurflänge (16) angeordnet ist, und ein zweites Gebläse (28) umfassen, welches an der Endposition (26) der Auswurflänge (16) angeordnet ist, wobei das zweite Gebläse (27) einen Luftstrom mit einer Strömungsrate ausbläst, welche geringer ist als die des Luftstroms, welcher durch das erste Gebläse (22) ausgeblasen wird.

6. Maschine (1) nach Anspruch 5, umfassend ein Zwischengebläse (29), welches zwischen dem ersten Gebläse (27) und dem zweiten Gebläse (28) angeordnet ist, und welches einen Luftstrom mit einer Strömungsrate ausbläst, welche geringer ist als die Strömungsrate des ersten Gebläses (27) und größer ist als die Strömungsrate des zweiten Gebläses (28).

7. Maschine (1) nach einem der vorhergehenden Ansprüche, umfassend eine Austritts-Verhinderungs-Fläche (32), welche sich über der radial äußeren Fläche (14) entlang der Aufbaulänge (20) des Auswahlpfades (7) stromabwärts der Auswurflänge (16) erstreckt, um zu verhindern, dass die Stecker (10) mit der passenden Orientierung nach oben von der radial äußeren Fläche (14) austreten.

8. Maschine (1) nach Anspruch 7, wobei die Austritts-Verhinderungs-Fläche (32) sich zwischen dem Ende der Auswurflänge entlang eines Winkelbereichs erstreckt, welcher zwischen 50° und 70°, vorzugsweise 60°, beträgt.

9. Maschine (1) nach Anspruch 7, umfassend eine Abstreiffläche (36), welche über der Halterungsfläche (6) angeordnet ist und sich entlang der Versorgungslänge (11) und bis zu dem Initial-Abschnitt (25) der Auswurflänge (16) erstreckt, wobei die Abstreiffläche (36) dazu eingerichtet ist, einen oder mehrere Stecker (10) davon abzuhalten, sich an einem einzelnen getrennten Sitz (18), welcher jeweils zwischen zwei Trennungswänden (17) definiert ist, zu stapeln.

10. Maschine (1) nach Anspruch 9, umfassend eine Schutzwand (38), welche den Auswahlpfad (7) in den Rückzugspunkt (12) von dem Sammelraum (9) trennt, was eine direkte Verlagerung von Steckern von dem Sammelraum (9) zu dem Rückzugspunkt (12) verhindert.

11. Maschine (1) nach Anspruch 10, wobei sich die Schutzwand (39) zwischen zwei gegenüberliegenden Enden erstreckt, welche mit der Seitenwand (8) verbunden sind, wovon eines stromaufwärts und das andere stromabwärts des Rückzugspunkts (12) ist und einen Einlassrand (39) bildet, welcher sich rittlings des Auswahlpfades stromaufwärts des Rückzugspunkt (12) erstreckt und eine solche Form aufweist, um nur die Stecker mit der passenden Orientierung passieren zu lassen und die Stecker mit einer Orientierung, welche von der passenden Orientierung abweichend ist, aus dem Auswahlpfad (7) und in Richtung des Sammelraums (9) abzulenken.

## Revendications

1. Machine (1) pour orienter des objets ayant la forme caractéristique de bouchon-pompes (10), avec un petit tube allongé s'étendant dans un sens longitudinal et une tête de distribution connectée à une extrémité du petit tube et élargie transversalement dans le sens longitudinal, la machine (1) comprenant :
- une structure de support (2),
- un plateau rotatif (3) incliné par rapport à un plan horizontal et connecté de façon rotationnelle à la structure de support (2) selon un axe de rotation (4), dans lequel le plateau rotatif (3) comprend un anneau de support (5) formant une surface de support annulaire (6) s'étendant le long d'un chemin de sélection (7),
- une paroi latérale (8) s'étendant le long d'une circonférence externe de la surface de support (6) de manière à définir le chemin de sélection (7) radialement vers l'extérieur et à définir, avec le plateau rotatif (3), un espace de collecte (9) pour collecter les bouchon-pompes (10) libres à orienter,
- un moteur électrique pour faire tourner le plateau rotatif (3) sur l'axe de rotation (4) de manière à alimenter les bouchon-pompes (10) de l'espace de collecte (9) sur la surface de support (6) dans une longueur d'alimentation (11) du chemin de sélection (7) et à déplacer la surface de support (6) le long du chemin de sélection depuis la longueur d'alimentation (11) jusqu'à un point de retrait (12),
dans lequel la surface de support (6) forme une surface radialement interne (13) qui est substantiellement lisse et s'étend tout le long du chemin de sélection (7), une surface radialement externe (14) abaissée par rapport à la surface radialement interne (13), qui est substantiellement lisse et s'étend tout le long du chemin de sélection (7), ainsi qu'un cran (31) s'étendant tout le long du chemin de sélection (7) entre la surface radialement interne (13) et la surface radialement externe (14), de sorte que les bouchon-pompes (10) peuvent se placer sur la surface de support (6) avec une orientation adéquate, la tête de distribution étant soutenue sur la surface radialement externe (14) abaissée et le petit tube étant orienté à peu près radialement vers l'intérieur et soutenu sur la surface radialement interne (13),
- un moyen d'éjection (15) connecté à la structure de support (2) le long d'un chemin d'éjection (16) du chemin de sélection entre la longueur d'alimentation (11) et le point de retrait (12), et configuré pour éjecter de la surface de support (6) les bouchon-pompes (10) ayant une orientation qui est différente de l'orientation adéquate,
- une pluralité de parois de partage rétractables (17) connectées à l'anneau de support (5) de manière mobile entre une position levée, dans laquelle les parois de partage (17) se projettent à partir de la surface de support (6), formant une séquence de sièges discrets (18) singularisant et recevant les bouchon-pompes (10) dans l'orientation adéquate, et une position abaissée, dans laquelle les parois de partage (17) sont rétractées dans la surface de support (6) et permettent aux bouchon-pompes (10) de coulisser sur la surface de support dans un sens à la circonférence de l'axe de rotation (4), un moyen de pilotage (19) qui déplace les parois de partage (17) de sorte que, dans la longueur d'alimentation (11), les parois de partage (17) sont en position levée, et dans une longueur d'accumulation (20) du chemin de sélection entre la longueur d'éjection (16) et le point de retrait (12), les parois de partage (17) sont rétractées dans la position abaissée, **caractérisé en ce que** lesdites parois de partage (17) rétractables sont reçues de manière coulissante, entre lesdites positions levée et abaissée, dans une pluralité de fentes traversantes (21) formées par l'anneau de support (5) et s'ouvrant dans la surface radialement interne (13).

2. Machine (1) selon la revendication 1, dans laquelle le moyen de pilotage (19) comprend un mécanisme de positionnement mécanique qui dispose toutes les parois de partage (17) de la même manière, en fonction de leur position le long du chemin de sélection.

3. Machine (1) selon la revendication 2, dans laquelle les fentes traversantes (21) sont en position radiale par rapport à l'axe de rotation (4), dans laquelle le mécanisme de manipulation comprend un chemin de came (22) qui est stationnaire par rapport à la structure de support (2) et s'étend sur l'axe de rotation (4) et un suiveur de came connecté à la paroi de partage (17) et en contact avec la came (22).

4. Machine (1) selon l'une des revendications précédentes, dans laquelle les parois de partage (17) sont en position levée d'un point de départ (24) de la longueur d'alimentation (11) jusqu'à une partie initiale (25) de la longueur d'éjection (16), et s'abaissent graduellement de la position levée dans la partie initiale (25) jusqu'à la position abaissée dans une partie finale (26) de la longueur d'éjection (16) et restent dans la position abaissée de la partie finale (26) de la longueur d'éjection (16), au moins jusqu'au point de retrait (12).

5. Machine (1) selon la revendication 4, dans laquelle le moyen d'éjection (15) comprend un premier souffleur (27) disposé à la partie initiale (25) de la longueur d'éjection (16) et un second souffleur (28) disposé à la partie finale (26) de la longueur d'éjection (16), dans laquelle le second souffleur (28) expulse un jet d'air à un débit qui est inférieur à celui du jet d'air expulsé par le premier souffleur (27).

6. Machine (1) selon la revendication 5, comprenant un souffleur intermédiaire (29) disposé entre le premier souffleur (27) et le second souffleur (28) et qui expulse un jet d'air à un débit qui est inférieur au débit du premier souffleur (27) et supérieur au débit du second souffleur (28).

7. Machine (1) selon l'une des revendications précédentes, comprenant une surface de prévention d'échappement (32) s'étendant au-dessus de la surface radialement externe (14) le long de la longueur d'accumulation (20) du chemin de sélection (7) en aval de la longueur d'éjection (16), de manière à empêcher les fiches (10) ayant la bonne orientation de sortir par le haut de la surface radialement externe (14).

8. Machine (1) selon la revendication 7, dans laquelle la surface de prévention d'échappement (32) s'étend entre les extrémités de la longueur d'éjection le long d'un débattement angulaire allant de 50° à 70°, de préférence 60°.

9. Machine (1) selon la revendication 7, comprenant une surface de balayage (36) disposée au-dessus de la surface de support (6) et s'étendant le long de la longueur d'alimentation (11) jusqu'à la partie initiale (25) de la longueur d'éjection (16), ladite surface d'essuyage (36) étant configurée pour empêcher qu'une ou plusieurs fiches (10) ne s'empilent sur un seul siège discret (18) défini entre deux parois de partage (17), respectivement.

10. Machine (1) selon la revendication 9, comprenant une paroi de protection (38) séparant le chemin de sélection (7) dans le point de retrait (12) de l'espace de collecte (9), prévenant ainsi un déplacement direct des fiches de l'espace de collecte (9) vers le point de retrait (12).

11. Machine (1) selon la revendication 10, dans laquelle la paroi de protection (38) s'étend entre deux extrémités opposées connectées à la paroi latérale (8), l'une en amont et l'autre en aval du point de retrait (12) et forme un rebord d'entrée (39) s'étendant de part et d'autre du chemin de sélection en amont du point de retrait (12) et ayant une forme telle qu'elle laisse passer uniquement les fiches ayant l'orientation adéquate et dévie les fiches ayant une orientation différente de l'orientation adéquate hors du chemin de sélection (7), vers l'espace de collecte (9).
